# EUROPEAN PATENT APPLICATION

(11) **EP 4 772 377 A1**
(43) Date of publication of application: **08.07.2026**
(21) Application number: 23959517.6
(22) Date of filing: 20.11.2023
(51) Int. Cl.: B60K 35/00, B60K 35/50, B60R 11/02, B60R 11/00

(54) **DISPLAY DEVICE FOR VEHICLE**

(71) Applicant: LG Electronics Inc., Yeongdeungpo-gu Seoul 07336 (KR)
(72) Inventor: HWANG, Hyokune, Seoul 06772 (KR); CHO, Youngjoo, Seoul 06772 (KR); BAE, Jinwan, Seoul 06772 (KR); KWON, Boan, Seoul 06772 (KR)
(74) Representative: Vossius & Partner Patentanwälte Rechtsanwälte mbB
(86) International application number: PCT/KR2023/018704
(87) International publication number: WO 2025/110260

(57) **Abstract**

A display device for a vehicle, according to an embodiment of the present invention, comprises: a base; a flexible display: an upper plate connected to the upper part of the flexible display; a lower plate connected to the lower part of the flexible display; supporting bars disposed on the front surface of the flexible display; a raising and lowering driving source for raising and lowering the upper plate; a linkage connected to each of the upper plate, the lower plate, and the base; and a guide for guiding the supporting bars.

## Description

### [Technical Field]

The present invention relates to a vehicle display device.

### [Background Art]

A display device can be mounted on a vehicle.

An example of a vehicle-mounted display device is a vehicle display device disclosed in U.S. Pat. No. 10-2343244 B1 Public Notice dated December 23, 2021, which is installed in the interior of a vehicle and has a variable display area, comprising: a first frame having one end coupled to an interior member of the vehicle; a second frame having one end coupled to the other end of the first frame and rotatable relative to the first frame about the one end; a flexible display disposed on one surface of the first frame and the second frame and foldable in a direction such that the other surface of the first frame overlaps the other surface of the second frame; and an elastic member that applies tension to the flexible display inwardly of the interior member when the flexible display is unfolded.

### [Disclosure]

### [Technical Problem]

The present embodiment provides a vehicle display device a vehicle display device that changes shape according to the condition of the vehicle.

The present embodiment provides a vehicle display device that facilitates visibility while the vehicle is in driving.

The present embodiment provides a vehicle display device that can provide a large screen when the vehicle is not in driving.

### [Technical Solution]

A vehicle display device according to the present embodiment comprises a flexible display; an upper plate connected to an upper portion of the flexible display; a lower plate connected to a lower portion of the flexible display; a supporting bar disposed on a front surface of the flexible display; a base; a lifting driving source configured to raise or lower the upper plate; a linkage connected to each of the upper plate, the lower plate, and the base; and a guide configured to guide the supporting bar.

The lifting driving source may comprise a motor; a lead screw rotated by the motor; and a block disposed on the upper plate and raised or lowered along the lead screw.

The upper plate may comprise a block mounter on which the block is disposed.

The linkage may comprise an upper link rotatably connected to the upper plate; a rotation link connected to the lower plate and rotatably connected to the base; and a lower link rotatably connected to each of the upper link and the rotation link.

The linkage may comprise a guide link rotatably connected to each of the upper link, the lower link, and the base.

The guide link may be vertically spaced from the rotation link.

A connection portion may be protruded on the lower plate.

A through hole may be formed in the rotation link.

The vehicle display device further comprise a shaft.

The shaft may be disposed at the connection portion and may penetrate the through hole.

The vehicle display may further comprise a spring. The spring may be disposed on one of the connecting portion and the rotation link and in contact with the other of the connecting portion and the rotation link.

A protrusion may protrude on the supporting bar. The guide may have guide rails formed to guide the protrusions.

A plurality of supporting bars may be provided on a front surface of the flexible display

The plurality of supporting bars may be spaced apart from each other in the vertical direction.

An uppermost supporting bar among the plurality of supporting bars may be coupled to the flexible display so as to be disposed below the upper plate.

A lowermost supporting bar among the plurality of supporting bars may be coupled to the flexible display so as to be disposed above the lower plate.

The supporting bar may comprise a supporting member extending in the left-right direction and disposed on the front surface of the flexible display; a follower disposed on the supporting member and having a protrusion protruding from the follower.

The vehicle display device may further comprise a support member.

The support member may be connected to the linkage and may support the supporting member.

The guide rail may comprise a first rail that guides the protrusion in a vertical direction; a second rail extending from the first rail.

The second rail may comprise a curved portion.

A width of the second rail may be greater than a width of the first rail.

A vehicle display device according to the present embodiment may comprise a base; a flexible display; an upper plate connected to an upper portion of the flexible display; a lower plate connected to a lower portion of the flexible display; a supporting bar disposed on a front surface of the flexible display; a lifting mechanism figured to raise or lower the upper plate; and a rotation mechanism linked to the upper plate for rotating the lower plate around the base.

The rotation mechanism may comprise an upper link connected to the upper plate; a rotation link connected to the lower plate; and a lower link connected to the upper link and the rotation link.

The vehicle display device may further comprise a shaft disposed on the lower plate. The rotation link may be connected to the shaft.

The rotation mechanism may comprise a guide disposed on the base to guide the supporting bar.

The vehicle display device may further comprise a support member connected to the rotation mechanism to support the supporting bar.

### [Advantageous Effect]

According to an embodiment of the present invention, the flexible display can be bent and the upper height of the flexible display can be lowered, thereby helping the display device secure a clear view for the occupant.

Furthermore, the flexible display can be flattened and the upper height of the flexible display can be raised, thereby providing a large screen.

Furthermore, the upper plate is raised and lowered by a motor and linkage, and the lower plate rotates, thereby minimizing the number of components and weight.

Furthermore, a guide guides the support bar, enabling the flexible display to bend smoothly.

Furthermore, a support member supports the support bar, minimizing compression on the flexible display.

Furthermore, a rotation link is connected to a shaft disposed on the lower plate, allowing the rotation link to slide along the shaft. A spring provides elastic support for the rotation link, thereby minimizing the effects of vibrations and other factors.

### [Description of Drawings]

Fig. 1 is a view illustrating a vehicle display device according to the present embodiment,
Fig. 2 is an exploded perspective view of the vehicle display device according to the present embodiment,
Fig. 3 is a perspective view of the vehicle display device according to the present embodiment,
Fig. 4 is a plan view of the vehicle display device according to the present embodiment,
Fig. 5 is a cross-sectional view of a display panel according to the present embodiment when bent,
Fig. 6 is a perspective view of a linkage according to the present embodiment,
Fig. 7 is a view illustrating the vehicle display device according to the present embodiment in a raising mode,
FIG. 8 is a view illustrating a vehicle display device according to the present embodiment in a lowering and bending mode,
FIG. 9 is a view illustrating a process in which a linkage according to the present embodiment deforms a flexible display,
FIG. 10 is a view illustrating a linkage, a supporting bar, and a guide according to the present embodiment,
FIG. 11 is a perspective view illustrating a linkage according to the present embodiment when connected to a lower plate,
FIG. 12 is a perspective view illustrating a linkage according to the present embodiment when separated from the lower plate.

### [Best Mode]

Hereinafter, specific embodiments of the present invention will be described in detail with reference to the drawings.

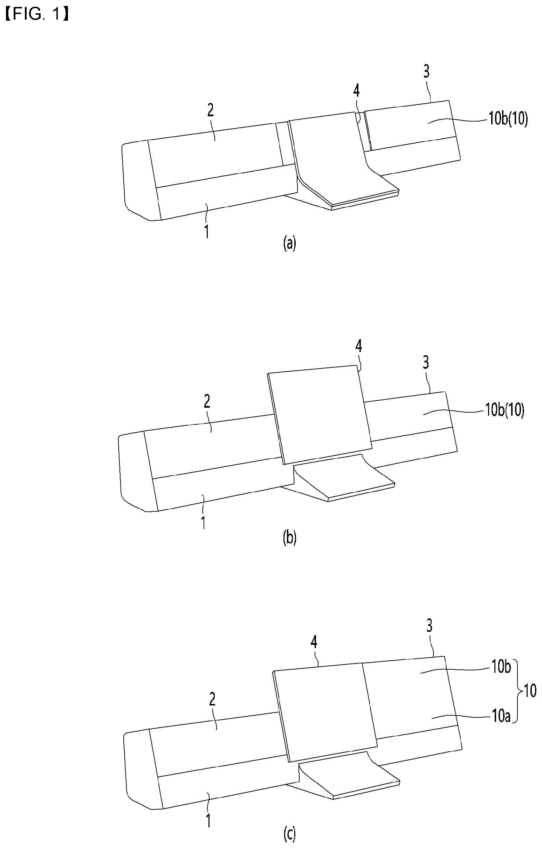

Fig. 1 is a view illustrating a vehicle display device according to the present embodiment.

The vehicle display device may be mounted on a vehicle dashboard 1.

A plurality of displays may be mounted on the vehicle dashboard 1.

At least one of the plurality of displays may have a variable shape.

The plurality of displays may comprise a driver's display 2 disposed in front of the driver's seat, a passenger's display 3 disposed in front of the passenger's seat, and a center display 4 disposed between the driver's display 2 and the passenger's display 3.

The shape of the driver's display 2 may not be variable.

The shapes of the passenger's display 3 and the center display 4 may be variable depending on the condition of the vehicle or the passenger's situation.

Figure 1 (a) illustrates a driving mode in which the passenger is driving the vehicle. Figure 1 (b) illustrates a special mode in which the vehicle or passenger is in a special situation. Figure 1 (c) illustrates a parking mode in which the vehicle is parked.

The driving mode may be a mode in which the driver drives the vehicle while holding the steering wheel.

Examples of special modes comprise a stationary mode in which the vehicle is temporarily stopped, or an autonomous driving mode in which the vehicle operates autonomously.

The special mode may be a mode other than driving or parking mode, and may be a non-driving mode.

The parking mode may be a mode in which the vehicle is parked and a non-driving mode.

The driver's display 2 may be a display that conveys information to the driver.

The driver's display 2 may be a display which shape remains constant regardless of the mode of vehicle.

The passenger's display 3 may be a Passenger Information Display or Co-driver Display that conveys information to the passenger.

The passenger's display 3 may have a top height is lower in driving or special modes, and a top height is high in parking mode. In parking mode, the top height of the passenger's display 3 may be higher than the top height of the passenger's display 3 in driving or special modes.

The passenger's display 3 may comprise a flexible display 10 that can be bent.

The center display 4 may be a Center Information Display that transmits information between the driver's display 2 and the passenger's display 3.

The flexible display 10 may provide a screen on the rear, allowing a passenger sitting in the passenger seat to enjoy content provided by the flexible display 10.

As shown in FIGS. 1 (a) and 1 (b), a portion of the lower portion of the flexible display 10 may be concealed within the dashboard 1 of vehicle, as shown in FIG. 1 (c), the concealed portion may be exposed to the vehicle interior.

A portion of the flexible display 10 may be a variable region 10a which shape may be transformed to bend or flatten, while the remaining portion of the flexible display 10 may be a flat region 10b that does not bend and maintains a flat shape.

The flexible display 10 may comprise a flat region 10b and a variable region 10a extending from the flat region 10b. The flat region 10b may be closer to the top of the flexible display 10, and the variable region 10a may be closer to the bottom of the display 10.

As illustrated in FIGS. 1 (a) and 1 (b), the passenger display 3 may be in a bend-in mode, in which the variable region 10a is bent, and in a slide-down mode, in which the top of the flexible display 10 is lowered.

The passenger display 3, as illustrated in FIG. 1 (c), may be in a flat mode, in which the variable region 10a is flat, and in a slide-up mode, in which the top of the flexible display 10 is high.

An example of the passenger display 3 may comprise a bending mechanism and a rotation mechanism, respectively. The bending mechanism may bend the flexible display 10, and the lifting mechanism may raise or lower the top height of the flexible display 10.

The other example of the passenger display 3 may comprise a bending and lifting mechanism, and the bending and lifting mechanisms may bend the flexible display 10 and raise or lower the top height of the flexible display 10.

Hereinafter, the bending and lifting mechanisms, or the combination of the bending mechanism and the lifting mechanism, will be referred to as a drive module.

The drive module may adjust the shape of the flexible display 10 or the top height of the flexible display 10 depending on the condition of vehicle or the passenger's situation.

Hereinafter, the direction in which the vehicle moves forward will be referred to as the forward direction, and the direction in which the vehicle moves backward will be referred to as the backward direction.

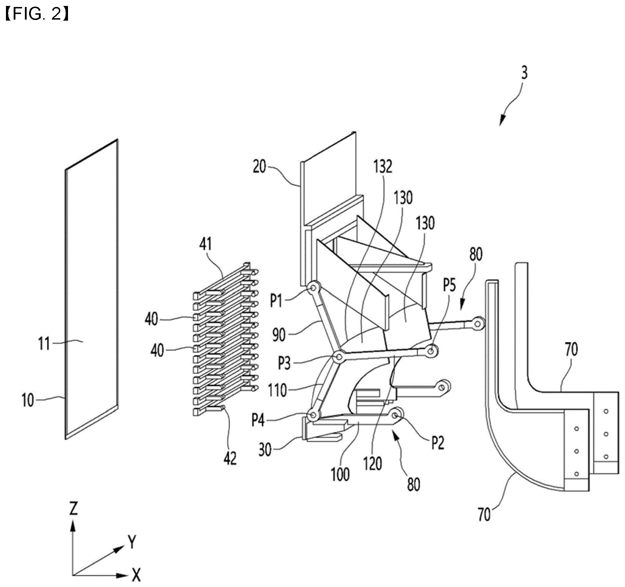

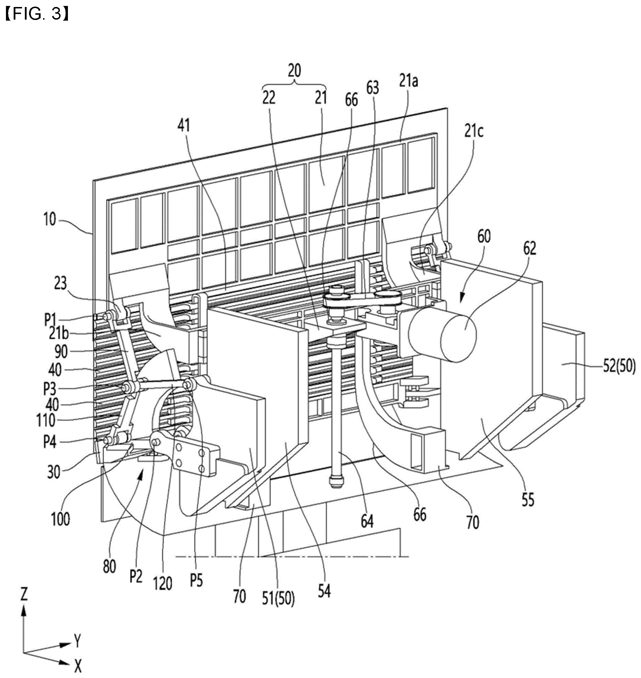

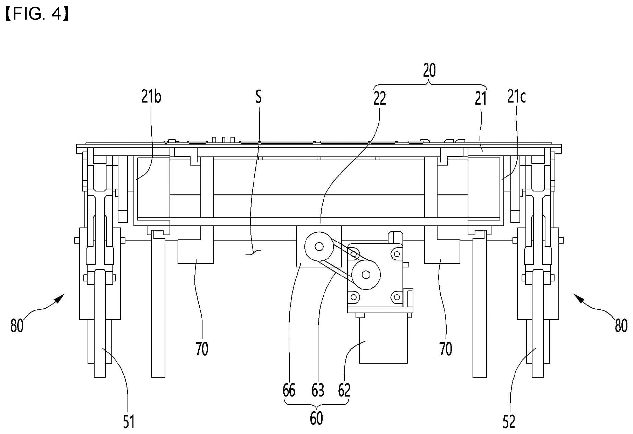

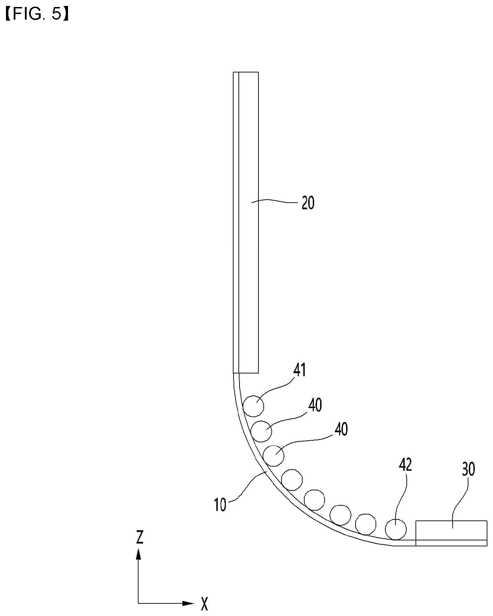

FIG. 2 is an exploded perspective view of a vehicle display device according to the present embodiment, FIG. 3 is a perspective view of a vehicle display device according to the present embodiment, FIG. 4 is a plan view of a vehicle display device according to the present embodiment, and FIG. 5 is a cross-sectional view of a display panel according to the present embodiment when bent.

The flexible display 10 may have a rectangular shape elongated in the vertical direction Z. The flexible display 10 may have a long side in the vertical direction Z and a short side in the left-right direction Y.

The flexible display 10 may comprise a bendable display element. Examples of the display element may be an organic light-emitting diode OLED or a plastic OLED POLED.

The flexible display 10 may further comprise an input interface disposed on the rear surface of the display element. An example of the input interface may be a touch screen.

The flexible display 10 may further comprise a circuit board connected to the display element. An example of the circuit board may be a flexible printed circuit board using a flexible insulating substrate. The circuit board may comprise a source PCB and a control PCB.

The flexible display 10 may have a front surface 11 facing forward and a rear surface facing the vehicle interior.

The passenger display 3 may comprise an upper plate 20, a lower plate 30, and a supporting bar 40.

The upper plate 20 may be connected to the upper portion of the flexible display 10.

The upper plate 20 may be disposed on the upper portion of the front surface of the flexible display 10. The upper plate 20 may cover the upper portion of the front surface of the flexible display 10.

The upper plate 20 may comprise an upper body 21, refer to FIG. 3 disposed on the front of the flexible display 10. The upper body 21 may have a rectangular shape extending in the left-right direction Y. A strength reinforcing rib 21a may be formed on the front of the upper body 21.

The upper plate 20 may comprise a pair of upper side bodies 21b 21c.

The pair of upper side bodies 21b 21c may protrude from the front of the upper body 21. The pair of upper side bodies 21b 21c may be formed integrally with the upper body 21.

The upper plate 20 may further comprise a block mounter 22, refer to FIG. 3 on which a block 66, refer to FIG. 3 is disposed.

The block mounter 22 may be formed between a pair of upper side bodies 21b and 21c. The block mounter 22 may be formed integrally with the pair of upper side bodies 21b and 21c. The block mounter 22 may be spaced apart from the upper body 21 in the front-rear direction X. A gap may be formed between the block mounter 22 and the upper body 21 in which a portion of a guide 70 may be disposed.

When the block 66 is raised or lowered, the upper plate 20 may be raised or lowered together with the block 66.

An upper link 90 of a linkage 80 may be connected to the upper plate 20. The upper plate 20 may move the upper link 90.

An upper link connection portion 23, refer to FIG. 3 may be formed on the upper plate 20.

The upper link 90 of the linkage 80 may be rotatably connected to the upper link connection portion 23.

The upper link connection portion 23 may be formed on the lower front surface of the upper plate 20. A through hole through which the first hinge shaft P1 passes may be formed on the upper link connection portion 23. The through hole may be open in the left-right direction Y.

The lower plate 30 may be connected to the lower portion of the flexible display 10. The lower plate 30 may be disposed on the lower portion of the front surface of the flexible display 10. The lower plate 30 may cover the lower portion of the front surface of the flexible display 10.

The size of the lower plate 30 may be smaller than the size of the upper plate 20.

The lower plate 30 may comprise a lower body 31 disposed on the front of the flexible display 10. The lower body 31 may have a rectangular shape extending in the left-right direction Y.

A rotation link 100 of a linkage 80 may be connected to the lower plate 30. The lower plate 30 may be rotated by the rotation link 100.

A supporting bar 40 may be disposed on the front of the flexible display 10. A plurality of supporting bars 40 may be provided on the front surface 11 of the flexible display 10.

Each of the plurality of supporting bars 40 may be attached to the front surface 11 of the flexible display 10 using an adhesive, such as double-sided tape or an adhesive.

Each of the plurality of supporting bars 40 may be formed to extend in the left-right direction Y. The plurality of supporting bars 40 may be disposed in a row in the vertical direction Z.

Each of the plurality of supporting bars 40 may support the flexible display 10 so that the pressed portion does not move forward when the flexible display 10 is pressed forward.

The plurality of supporting bars 40 may be spaced apart from each other in the vertical direction Z. The plurality of supporting bars 40 may be spaced apart from each other at a distance that does not interfere with each other when the flexible display 10 is bent.

The uppermost supporting bar 41 of the plurality of supporting bars 40 may be coupled to the flexible display 10 so as to be disposed below the upper plate 20.

The uppermost supporting bar 41 may be connected to the upper plate 20.

The lowermost supporting bar 42 of the plurality of supporting bars 40 may be connected to the flexible display 10 so as to be disposed below the lower plate 30.

The lowermost supporting bar 42 can be connected to the lower plate 30.

The flexible display 10, the upper plate 20, the lower plate 30, and the supporting bar 40 may form a flexible display module.

The region of the flexible display module comprising the upper plate 20 may be an upper flat region, the region of the flexible display module comprising the supporting bar 40 may be a bending region, and the region of the flexible display module comprising the lower plate 30 may be a lower flat region.

A vehicle display device may further comprise a base 50, an lifting drive unit 60, a guide 70, and a linkage 80.

One example of the base 50 may be formed integrally with the dashboard 1, refer to FIG. 1 of vehicle. The other example of the base 50 may be manufactured separately from the dashboard 1 of vehicle and then fastened to the dashboard 1 of vehicle using a fastening member such as a screw.

The base 50 may be disposed in front of the flexible display 10 and may be covered by the flexible display 10.

The base 50 may comprise a pair of side bases 51, 52 spaced apart in the left-right direction Y. A space S, refer to FIG. 4 may be formed between the pair of side bases 51, 52.

The lifting drive unit 60 may raise or lower the upper plate 20. The lifting drive unit 60 can be installed on the base 50, connected to the upper plate 20, and may raise or lower the upper plate 20.

At least a portion of the lifting drive unit 60 may be accommodated in a space S formed between a pair of side bases 51, 52 and protected by the pair of side bases 51, 52.

The lifting drive unit 60 may comprise a motor 62 disposed on the base 50; a lead screw 64 rotated by the motor 62; and a block 66 raised or lowered along the lead screw 64.

The motor 62 may be connected to the lead screw 64 via at least one power transmission member 63, and the lead screw 64 may be rotated by the at least one power transmission member 63.

The lead screw 64 may be disposed in front of the flexible display 10 and may be disposed in a vertical direction Z. The lead screw 64 may be spaced apart from the flexible display 10 in the front-rear direction X. All or a portion of the lead screw 64 may be accommodated in a space S formed between a pair of side bases 51, 52.

The block 66 may be moved in the longitudinal direction of the lead screw 66 when the lead screw 66 rotates. The block 66 may comprise a nut engaged with the lead screw 66 and a lifting body surrounding the outer circumference of the nut. The lifting body of the block 66 may be coupled to the block mounter 22.

The guide 70 may guide the supporting bar 40.

The guide 70 may be formed integrally with the base 50 or manufactured separately from the base 50 and then fastened to the base 50.

The supporting bar 40 may have a protrusion formed thereon, and the guide 70 may have a guide rail formed thereon along which the protrusion is guided.

The guide 70 may be disposed in front of the supporting bar 40. The supporting bar 40 may be guided along the guide 70 while fixed to the flexible display 10.

When the upper plate 20 is lowered, the guide 70 may guide the supporting bar 40 so that the supporting bar 40 bends the flexible display 10. When the upper plate 20 is raised, the guide 70 may guide the supporting bar 40 so that the supporting bar 40 flattens the flexible display 10.

A guide 70 may be in contact with a plurality of supporting bars 40.

A pair of guides 70 may be provided. The pair of guides 70 may be spaced apart in the left-right direction Y.

The pair of guides 70 may be disposed between a pair of side bases 51, 52.

A linkage 80 may be connected to each of the upper plate 20, the lower plate 30, and the base 50.

The linkage 80 may guide the lower plate 30 to rotate around the base 50 when the upper plate 20 is lowered.

When the upper plate 20 is lowered, the linkage 80 may rotate the lower plate 30 horizontally, as illustrated in FIG. 5, and the flexible display 10 may be bent.

When the upper plate 20 is raised, the linkage 80 may guide the lower plate 30 to rotate counter-clockwise around the base 50.

When the upper plate 20 is raised, the linkage 80 can rotate the lower plate 30 vertically, and the lower plate 30 may be disposed parallel to the upper plate 20, and the flexible display 10 may be deformed flat.

The base 50, the lifting drive source 60, the guide 70, and the linkage 80 may form a drive module.

The lifting drive unit 60 may be a lifting module or mechanism that raise or lower the top of the flexible display 10 by raising or lowering the upper plate 20.

The guide 70 and linkage 80 may be a rotation mechanism that rotates the lower plate 30 in conjunction with the upper plate 20. The guide 70 and linkage 80 may be a bending module or mechanism that bends the flexible display 10 in conjunction with the upper plate 20.

The linkage 80 may be composed of a combination of plurality of links.

The linkage 80 may comprise an upper link 90, a rotation link 100, and a lower link 110.

The upper link 90 may be connected to the upper plate 20 via a first hinge shaft P1.

The rotation link 100 may be connected to the base 50 via a second hinge shaft P2.

The lower link 110 may be connected to the upper link 90 via a third hinge shaft P3.

The lower link 110 may be connected to the rotation link 100 via a fourth hinge shaft P4.

The linkage 80 may further comprise a guide link 120.

The guide link 120 may be connected to the upper link 90 and the lower link 110 via the third hinge shaft P3.

The guide link 120 may be rotatably connected to the base 50 via a fifth hinge shaft P5.

As illustrated in FIG. 4, a plurality of linkages 80 may be provided. A pair of linkages 80 may be spaced apart from each other and may stably deform the flexible display module.

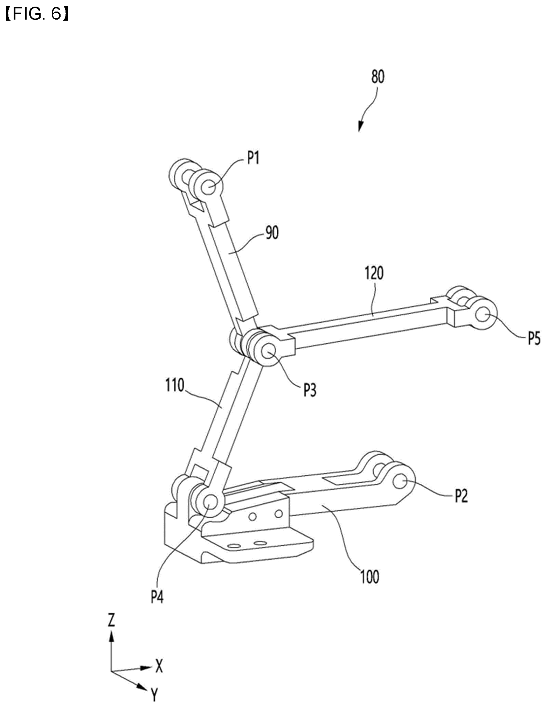

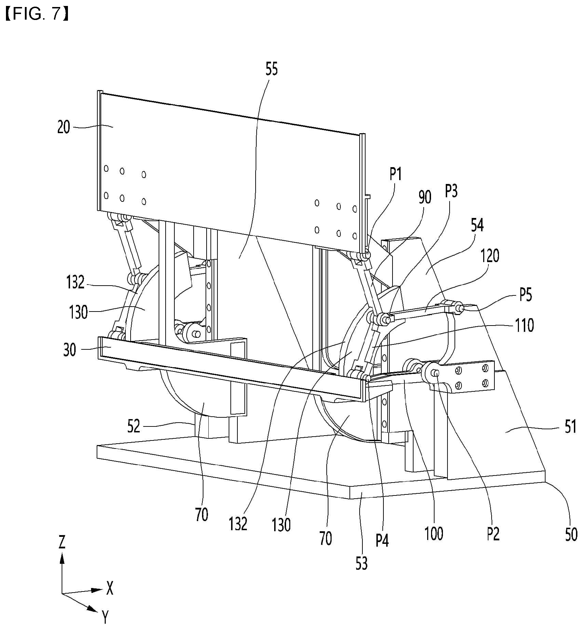

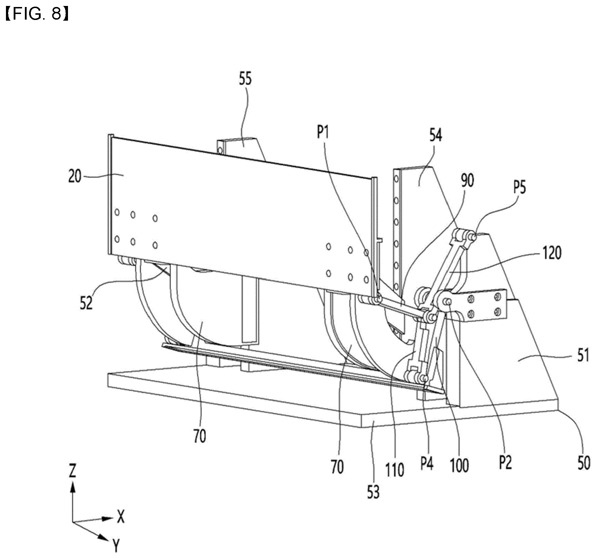

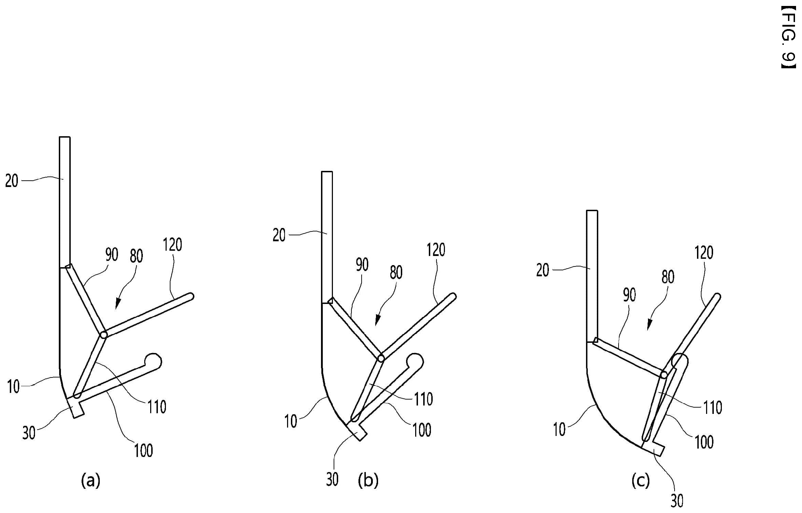

Fig. 6 is a perspective view of a linkage according to the present embodiment, Fig. 7 is a view of a vehicle display device according to the present embodiment in an ascending mode, Fig. 8 is a view of a vehicle display device according to the present embodiment in a descending and bending mode, and Fig. 9 is a view illustrating a process in which a linkage according to the present embodiment deforms a flexible display.

FIG. 9 (a) is a side view of the vehicle display device when it has completed operation in the raising mode, FIG. 9 (b) is a side view of the vehicle display device when it is operating in the lowering and bending modes, and FIG. 9 (c) is a side view of the vehicle display device when it has completed operation in the lowering and bending modes.

As illustrated in FIGS. 7 and 8, the base 50 may comprise a lower base 53, a pair of side bases 51, 52 erected on the upper surface of the lower base 53, and a pair of inner bases 54, 55 erected on the upper surface of the lower base 53.

The pair of inner bases 54, 55 may be spaced apart from each of the pair of side bases 51, 52.

The pair of inner bases 54, 55 may be disposed between the pair of side bases 51, 52.

One of the pair of inner bases 54, 55 may be installed with one of the pair of guides 70. The other of the pair of guides 70 may be installed with the other of the pair of inner bases 54, 55.

The upper link 90 may be rotatably connected to the upper plate 20. The upper link 90 may be rotatably connected to the upper plate 20 via a first hinge shaft P1.

When the upper plate 20 is raised or lowered, the upper link 90 may be moved while rotating around the first hinge shaft P1.

The upper link 90 may comprise an upper connection portion connected to the upper link connection portion 23, refer to FIG. 3 of the upper plate 20 via a first hinge shaft P1, and a lower connection portion connected to the lower link 110 and the guide link 120 via a third hinge shaft P3.

The rotation link 100 may be connected to the lower plate 30. The rotation link 100 may be rotatably connected to the base 50. The rotation link 100 may be rotatably connected to the base 50 via a second hinge shaft P2. The rotation link 100 may be rotated about the second hinge shaft P2, and may rotate the lower plate 30 horizontally, as illustrated in FIG. 8, or vertically, as illustrated in FIG. 7.

The rotary link 100 may comprise a front connection portion connected to the base 50 via a second hinge shaft P2, and a rear connection portion connected to the lower link 110 via a fourth hinge shaft P4.

The lower link 110 may be connected to each of the upper link 90 and the rotary link 100.

The lower link 110 may be rotatably connected to the upper link 90. The lower link 110 may be rotatably connected to the upper link 90 via a third hinge shaft P3.

The lower link 110 may be rotatably connected to the rotary link 100. The lower link 110 may be rotatably connected to the rotary link 100 via a fourth hinge shaft P4.

The lower link 110 may comprise an upper connection portion connected to the upper link 90 and the guide link 120 via a third hinge shaft P3, and a lower connection portion connected to the rotation link 100 via a fourth hinge shaft P4.

The lower link 100 may be linked to the upper link 90. When the upper link 90 is operated by the upper plate 20, the lower link 100 may rotate the rotation link 100 around the second hinge shaft P2, and the rotation link 100 may rotate the lower plate 30.

The lower link 100 may be a linkage link that is linked to the upper link 90 and rotates the rotation link 100.

The guide link 120 may be rotatably connected to at least one of the upper link 90 and the lower link 110. The guide link 120 may be connected to the upper link 90 and the lower link 110 via a third hinge shaft P3. The guide link 120 may be rotatably connected to the base 50. The guide link 120 may be rotatably connected to the base 50 via a fifth hinge shaft P5. The guide link 120 may rotate around the fifth hinge shaft P5 and guide the upper link 90 and the lower link 110.

The guide link 120 may comprise a rear connection portion connected to the upper link 90 and the lower link 110 via the third hinge shaft P3, and a front connection portion connected to the base 50 via the fifth hinge shaft P5.

The guide link 120 may be spaced apart from the rotation link 100 in the vertical direction Z.

The guide link 120 may be disposed above the rotation link 100 and may be spaced apart from the rotation link 100 in the vertical direction Z.

The vehicle display device may further comprise a support member 130 that supports the supporting bar 40.

The support member 130 may be connected to a rotation mechanism. The support member 130 may be connected to a linkage 80 to support the supporting bar 40.

The support member 130 may be rotated by the linkage 80.

The support member 130 may be connected to the rotation link 120 of the linkage 80 and may rotate together with the rotation link 120.

The support member 130 may have a contact point 132 formed thereon, with which the supporting bar 40 makes contact.

The contact point 132 may have an arc shape. The contact end 132 may have a convex shape facing backward.

The supporting bar 40 may contact or be separated from the contact end 132.

While the lower plate 30 rotates, the supporting bar 40 may contact the contact end 132. A supporting member 44 of the supporting bar 40 may contact the contact end 132.

The contact end 132 may have a convex shape facing backward.

The supporting member 44 may contact the support member 130, and the support member 130 may support the supporting member 44 without causing the supporting member 44 to be pushed forward.

When the lower plate 30 is rotated horizontally by the rotation link 100, the flexible display 10 may bend, and the front surface of the supporting bar 40 can contact the contact end 132.

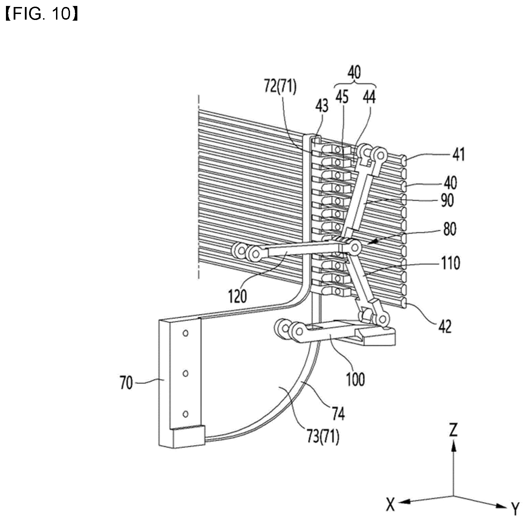

Fig. 10 is a view illustrating a linkage, a supporting bar, and a guide according to the present embodiment.

A protrusion 43 protrudes on the supporting bar 40.

The supporting bar 40 may comprise a supporting member 44 and a follower 45.

The supporting member 44 may be disposed on the front surface of the flexible display 10. The rear surface of the supporting member 44 may be attached to the front surface of the flexible display 10 using an adhesive, such as double-sided tape or adhesive. The supporting member 44 may extend in the left-right direction Y.

A follower 45 may be disposed on the supporting member 44. The follower 45 may be disposed on the front surface of the supporting member 44. The follower 45 may be connected to the supporting member 44 using a fastening member, such as a screw.

A protrusion 43 may protrude from the follower 45. The protrusion 43 may protrude laterally from the follower 45.

A guide rail 71 may be formed on the guide 70 to guide the protrusion 43.

The guide rail 71 may comprise a first rail 72 that guides the protrusion 43 vertically; and a second rail 73 extending from the first rail 72.

The first rail 72 may comprise a straight portion.

The second rail 73 may comprise a curved portion 74.

The width of the second rail 73 may be greater than the width of the first rail 72.

The width of the second rail 73 in the front-rear direction X may be greater than the width of the first rail 72 in the front-rear direction X.

While the protrusion 43 is guided to the first rail 72, it may be guided in the vertical direction X, and may enter the second rail 73 from the bottom of the first rail 72.

The protrusion 43 may be guided along the curved portion 74 while being guided by the second rail 73, may move along the shape of the curved portion 74, and may move along a curved trajectory.

When the protrusion 43 moves along a curved trajectory, the supporting bar 40 may move along the curved trajectory, and the area of the flexible display 10 where the supporting bar 40 is disposed may be bent into a curved shape.

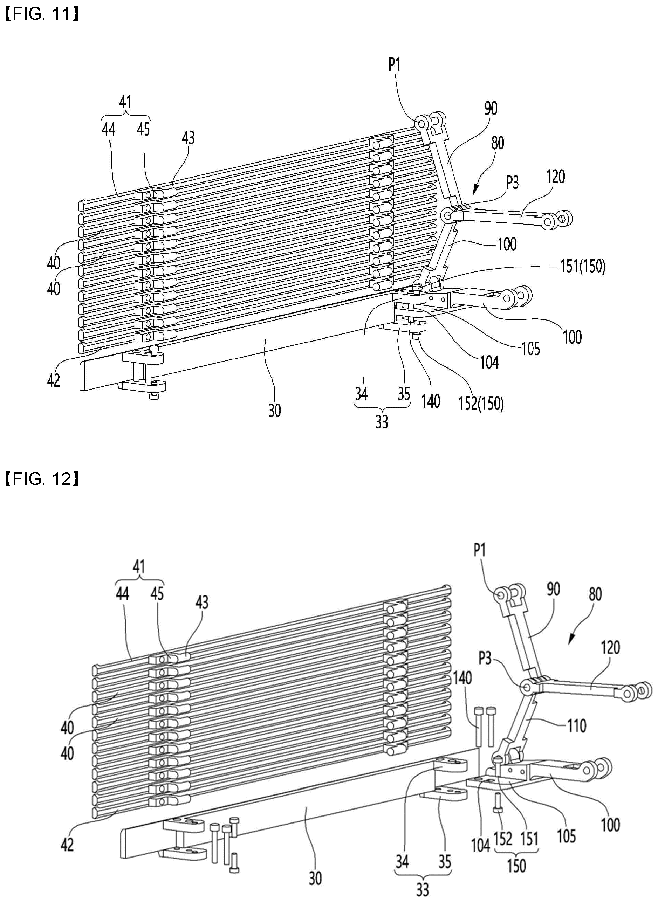

Fig. 11 is a perspective view of a linkage according to the present embodiment when connected to a lower plate, and Fig. 12 is a perspective view of a linkage according to the present embodiment when separated from the lower plate.

A connecting portion 33 connected to a rotation link 100 of a linkage 80 may be formed on the lower plate 30. The connecting portion 33 may be formed on the front surface of the lower plate 30.

The connecting portion 33 may be a connecting portion to which the rotary link 100 is slidably connected.

The connecting portion 33 may protrude from the lower plate 30. The connecting portion 33 may protrude forward from the front surface of the lower plate 30.

A pair of connecting portions 33 may be provided. The pair of connecting portions 33 may be spaced apart in the vertical direction Z. The pair of connecting portions 33 may comprise an upper connecting portion 34 and a lower connecting portion 35 spaced apart from the upper connecting portion 34 in the vertical direction.

A gap may be formed between the upper connecting portion 34 and the lower connecting portion 35.

A through hole 104 may be formed in the rotary link 100.

A rear connecting portion 105 may be formed in the rotary link 100. The through hole 104 may be formed to be open in the vertical direction Z in the rear connection portion 105.

The vehicle display device may further comprise a shaft 140.

The shaft 140 may be disposed on the lower plate 30.

The shaft 140 may pass through the connection portion 33 and the through hole 104.

The shaft 140 may be disposed on the connection portion 33 and may pass through the rear connection portion 105, particularly the through hole 104.

The upper portion of the shaft 140 may be disposed on the upper connection portion 34 of the connection portion 33, and the upper portion of the shaft 140 may be disposed on the lower connection portion 34 of the connection portion 33.

The rear connection portion 105 of the rotation link 100 may be connected to the shaft 140, and
the rear connection portion 105 of the rotation link 100 may be connected to slide vertically Z along the shaft 140.

The vehicle display device may further comprise a spring 150.

The spring 140 may be disposed on either the connection portion 33 or the rotation link 100. The spring 140 may contact the other of the connection portion 33 and the rotation link 100.

An example of the spring 150 may comprise an upper spring 151 mounted on the upper connection portion 44 and supporting the rear connection portion 105, and a lower spring 152 mounted on the lower connection portion 45 and supporting the rear connection portion 105.

The upper spring 151 may contact the upper surface of the rear connecting portion 105 and support the rear connecting portion 105.

The lower spring 152 may contact the lower surface of the rear connecting portion 105 and support the rear connecting portion 105.

The rear connecting portion 105 is slidably disposed on the shaft 140, and the spring 150 supports the rear connecting portion 105, thereby minimizing the effects of vibration and other factors, and minimizing malfunctions of the vehicle display device.

The above description is merely an example of the technical idea of the present disclosure, and those skilled in the art will appreciate that various modifications and variations may be made without departing from the essential characteristics of the present disclosure.

Accordingly, the embodiments disclosed in the present disclosure are not intended to limit the technical idea of the present disclosure but to explain it, and the scope of the technical idea of the present disclosure is not limited by these embodiments.

The scope of protection of the present disclosure should be interpreted by the claims below, and all technical ideas within a scope equivalent thereto should be interpreted as being included in the scope of the rights of the present disclosure.

## Claims

1. A vehicle display device comprising:
a flexible display;
an upper plate connected to an upper portion of the flexible display;
a lower plate connected to a lower portion of the flexible display;
a supporting bar disposed on a front surface of the flexible display;
a base;
a lifting driving source configured to raise or lower the upper plate;
a linkage connected to each of the upper plate, the lower plate, and the base; and
a guide configured to guide the supporting bar.

2. The vehicle display device of claim 1, wherein the lifting driving source comprises:
a motor;
a lead screw rotated by the motor; and
a block disposed on the upper plate and raised or lowered along the lead screw.

3. The vehicle display device of claim 2, wherein the upper plate comprises a block mounter on which the block is disposed.

4. The vehicle display device of claim 1, wherein the linkage comprises:
an upper link rotatably connected to the upper plate;
a rotation link connected to the lower plate and rotatably connected to the base; and
a lower link rotatably connected to each of the upper link and the rotation link.

5. The vehicle display device of claim 4, wherein the linkage comprises:
a guide link rotatably connected to each of the upper link, the lower link, and the base.

6. The vehicle display device of claim 5, wherein the guide link is vertically spaced from the rotation link.

7. The vehicle display device of claim 3,
wherein a connection portion is protruded on the lower plate;
a through hole is formed in the rotation link; and
the vehicle display device further comprises a shaft disposed at the connection portion and penetrating the through hole.

8. The vehicle display device of claim 7, comprising a spring disposed on one of the connecting portion and the rotation link and in contact with the other of the connecting portion and the rotation link.

9. The vehicle display device of claim 1, wherein a plurality of supporting bars is provided on a front surface of the flexible display, and the plurality of supporting bars is spaced apart from each other in the vertical direction.

10. The vehicle display device of claim 9,
wherein an uppermost supporting bar among the plurality of supporting bars is coupled to the flexible display so as to be disposed below the upper plate, and
a lowermost supporting bar among the plurality of supporting bars is coupled to the flexible display so as to be disposed above the lower plate.

11. The vehicle display device of claim 1, wherein a protrusion is formed on the supporting bar, and a guide rail is formed on the guide to guide the protrusion.

12. The vehicle display device of claim 11, wherein the supporting bar comprises:
a supporting member extending in the left-right direction and disposed on the front surface of the flexible display;
a follower disposed on the supporting member and having a protrusion protruding from the follower.

13. The vehicle display device of claim 12, further comprising:
a support member connected to the linkage and supporting the supporting member.

14. The vehicle display device of claim 11, wherein the guide rail comprises:
a first rail that guides the protrusion in a vertical direction;
a second rail extending from the first rail,
wherein the second rail comprising a curved portion.

15. The vehicle display device of claim 14, wherein a width of the second rail is greater than a width of the first rail.

16. A vehicle display device comprising:
a base;
a flexible display;
an upper plate connected to an upper portion of the flexible display;
a lower plate connected to a lower portion of the flexible display;
a supporting bar disposed on a front surface of the flexible display;
a lifting mechanism figured to raise or lower the upper plate; and
a rotation mechanism linked to the upper plate for rotating the lower plate around the base.

17. The vehicle display device of claim 16, wherein the rotation mechanism comprises;
an upper link connected to the upper plate;
a rotation link connected to the lower plate; and
a lower link connected to the upper link and the rotation link.

18. The vehicle display device of claim 16, further comprising;
a shaft disposed on the lower plate, and
wherein the rotation link is connected to the shaft.

19. The vehicle display device of claim 16, wherein the rotation mechanism comprises a guide disposed on the base to guide the supporting bar.

20. The vehicle display device of claim 16, further comprising a support member connected to the rotation mechanism to support the supporting bar.
